# EUROPÄISCHE PATENTANMELDUNG

(11) **EP 3 437 843 A1**
(43) Veröffentlichungstag der Anmeldung: **06.02.2019**
(21) Anmeldenummer: 18186216.0
(22) Anmeldetag: 30.07.2018
(51) Int. Cl.: B29C 69/00, B29C 65/00

(54) **VERFAHREN ZUR HERSTELLUNG EINES VERKLEIDUNGSTEILS**

(30) Priorität: 01.08.2017 DE 102017117410
(71) Anmelder: REHAU AG + Co, 95111 Rehau (DE)
(72) Erfinder: Riepenhausen, Holm, 95111 Rehau (DE)

(57) **Zusammenfassung**

Die vorliegende Erfindung betrifft ein Verfahren zur Herstellung eines Verkleidungsteils eines Kraftfahrzeuges, wobei das Verkleidungsteil aus einem polymeren Werkstoff besteht und einen Verkleidungsteil-Grundkörper (1, 1') mit einer Öffnung (2), sowie einen die Öffnung (2) verdeckenden Deckel (3) aufweist, umfassend die folgenden Schritte: Bereitstellen eines Verkleidungsteil-Grundkörpers (1), Herstellen der Öffnung (2) in dem Verkleidungsteil-Grundkörper (1) durch das Heraustrennen eines Segments (3') aus dem Verkleidungsteil-Grundkörper (1), wobei das Segment (3') einen geschlossenen Außenumfang (A) aufweist, Verwenden des Segments (3') für die Herstellung des Deckels (3) durch ein Abrunden und/oder Umformen des Randbereichs (4) des Segments (3'), Verbinden des Deckels (3) mit dem ursprünglichen Verkleidungsteil-Grundkörper (1) oder mit einem entsprechenden Verkleidungsteil-Grundkörper (1') über wenigstens ein Verbindungselement (5). Teil der Erfindung ist ferner ein mit dem Verfahren hergestelltes Verkleidungsteil.

## Beschreibung

Die vorliegende Erfindung betrifft ein Verfahren zur Herstellung eines Verkleidungsteils eines Kraftfahrzeuges, sowie ein mit diesem Verfahren hergestelltes Verkleidungsteil eines Kraftfahrzeuges.

Im Stand der Technik sind eine Vielzahl von Verkleidungsteil für Kraftfahrzeuge bekannt. Das erfindungsgemäße Verfahren dient zur Herstellung eines Verkleidungsteils eines Kraftfahrzeuges, wobei das Verkleidungsteil aus einem polymeren Werkstoff besteht und einen Verkleidungsteil-Grundkörper mit einer Öffnung, sowie einen die Öffnung verdeckenden Deckel aufweist.

Derartige Verkleidungsteile für Kraftfahrzeuge sind beispielhaft aus der DE 102 03 416 B4, DE 10 2013 222 686 A1, DE 11 2011 101 777 T5 sowie der DE 103 40 154 A1 bekannt.

Verkleidungsteile für Kraftfahrzeuge sind in der Regel auf ihrer Sichtseite mit einer Lackschicht versehen, sodass eine separate Herstellung, d. h. eine getrennte Herstellung von Deckel und Verkleidungsteil-Grundkörper, bei der Lackierung zu wahrnehmbaren Farbunterschieden führen kann, die zum einen auf den unterschiedlichen Herstellungsprozess von Deckel und Verkleidungsteil-Grundkörper und zum anderen auf die örtlich voneinander getrennte Lackierung zurückzuführen ist.

Insbesondere das Vorsehen von Öffnungen bereits in dem Verkleidungsteil-Grundkörper führt zu unerwünschten Fließlinien, wenn das Verkleidungsteil mittels Spritzguss aus einem thermoplastischen Polymer hergestellt wird. Auch erhöht sich hierdurch die Variantenvielfalt für den Fall, dass keine Öffnung bzw. kein Deckel vorgesehen ist. Auch die separate Herstellung des Deckels in einem zusätzlichen Werkzeug verursacht neben den Extrakosten für das Werkzeug des Deckels auch Probleme hinsichtlich der Geometrie und Formabweichung.

Aufgabe der vorliegenden Erfindung ist es daher, ein Verfahren zur Herstellung eines Verkleidungsteils eines Kraftfahrzeuges anzugeben, welches wirtschaftlicher ist und eine Farbabweichung zwischen dem Deckel und dem Verkleidungsteil-Grundkörper zuverlässig zu vermeiden vermag.

Diese Aufgabe wird erfindungsgemäß gelöst durch ein Verfahren zur Herstellung eines Verkleidungsteils eines Kraftfahrzeuges, wobei das Verkleidungsteil aus einem polymeren Werkstoff besteht und einen Verkleidungsteil-Grundkörper mit einer Öffnung, sowie einen die Öffnung verdeckenden Deckel aufweist,
umfassend die folgenden Schritte:
- Bereitstellen eines Verkleidungsteil-Grundkörpers,
- Herstellen der Öffnung in dem Verkleidungsteil-Grundkörper durch das Heraustrennen eines Segments aus dem Verkleidungsteil-Grundkörper, wobei das Segment einen geschlossenen Außenumfang aufweist,
- Verwenden des Segments für die Herstellung des Deckels durch ein Abrunden und/oder Umformen des Randbereichs des Segments,
- Verbinden des Deckels mit dem ursprünglichen Verkleidungsteil-Grundkörper oder mit einem entsprechenden Verkleidungsteil-Grundkörper über wenigstens ein Verbindungselement.

Die Erfindung zeichnet sich dadurch aus, dass die Öffnung durch das Heraustrennen eines Segmentes aus dem Verkleidungsteil-Grundkörper hergestellt wird und das Segment hierbei zeitgleich oder in einem nachgelagerten Schritt zu einem Deckel weiterverarbeitet wird. Hierzu wird der Randbereich des Segments abgerundet und/oder umgeformt. Erfindungsgemäß lassen sich die Einflüsse auf die Lackierbarkeit von Deckel und Verkleidungsteil-Grundkörper durch unterschiedliche Herstellungsprozesse, Lackierorte bzw. unterschiedliche Herstellungwerkzeuge vermeiden oder zumindest stark reduzieren.

Vorzugsweise kann auch der Randbereich der Öffnung in dem Verkleidungsteil-Grundkörper durch ein Abrunden und/oder Umformen bearbeitet werden. Hierdurch ergibt sich ein optisch besonders ansprechendes Fugenbild zwischen dem Deckel und dem Verkleidungsteil-Grundkörper.

Das Abrunden und/oder Umformen des Randbereichs des Segmentes und/oder das Abrunden und/oder Umformen des Randbereichs der Öffnung kann wenigstens einen Prägevorgang und/oder wenigstens einen Fräsvorgang umfassen.

Der Schritt des Abrundens und/oder Umformens des Randbereichs des Segments und/oder der Schritt des Abrundens und/oder Umformens des Randbereichs der Öffnung kann bevorzugt zusammen mit dem Schritt des Heraustrennens des Segmentes durchgeführt werden.

Eine Kombination eines Heraustrennens des Deckels durch einen Fräsvorgang in Verbindung mit einem Prägevorgang hat sich als besonders wirtschaftlich und vorteilhaft erwiesen. Hierfür kann eine dem Fräsvorgang vorgelagerte Verprägung durchgeführt werden. Alternativ erfolgt das Verprägen jedoch zeitgleich oder nachgelagerten zu dem Fräsvorgang.

Das wenigstens eine Verbindungselement kann stoffschlüssig und/oder formschlüssig mit dem Verkleidungsteil-Grundkörper verbunden sein oder werden.

Das wenigstens eine Verbindungselement kann ergänzend oder alternativ stoffschlüssig und/oder formschlüssig mit dem Deckel oder dem Segment verbunden sein oder werden.

Das wenigstens eine Verbindungselement oder wenigstens ein Teil des wenigstens einen Verbindungselements kann einstückig zusammen mit dem Verkleidungsteil-Grundkörper ausgebildet sein. Insbesondere kann das wenigstens eine Verbindungselement einstückig zusammen mit dem Bereich des späteren Segments des Verkleidungsteil-Grundkörpers ausgebildet sein. Dies bedeutet insbesondere, dass das Verbindungselement bereits bei der Herstellung des Verkleidungsteil-Grundkörpers an der Stelle des späteren Segmentes vorgesehen wird. Für den Fall, dass bei der entsprechenden Variante des Verkleidungsteils keine Öffnung vorgesehen ist verbleibt das Verbindungselement folglich ungenutzt am Verkleidungsteil-Grundkörper oder kann von dort entfernt werden.

Das wenigstens eine Verbindungselement kann wenigstens einen Befestigungsabschnitt zur Befestigung an dem Deckel und/oder zur Befestigung an dem Verkleidungsteil-Grundkörper umfassen. Bei dem wenigstens einen Befestigungsabschnitt kann es sich insbesondere um einen Teil eines Rastelements und/oder eine Schweißlasche und/oder eine Befestigungselementaufnahme handeln.

Das Segment und der Verkleidungsteil-Grundkörper können mit einer individuellen Codierung versehen werden oder bereits versehen sein, um eine exakte Zuordnung des Deckels zu dem ursprünglichen Verkleidungsteil-Grundkörper zu ermöglichen. Dies ist entsprechend nicht notwendig, wenn der Deckel nicht mit dem ursprünglichen Verkleidungsteil-Grundkörper, sondern mit einem entsprechenden Verkleidungsteil-Grundkörper verbunden wird.

Das Heraustrennen kann mittels einer Stanzvorrichtung, einer Fräsvorrichtung, einer Wasserstrahlschneidvorrichtung, einer Bohrvorrichtung, einer Laserstrahlschneidvorrichtung, einer Messerschneidvorrichtung, einer Prägevorrichtung oder einer Kombination aus wenigstens zwei der vorgenannten Vorrichtungen erfolgen.

Eine geeignete Prägevorrichtung bzw. ein geeignetes Prägeverfahren kann insbesondere der DE 10 2013 100 420 A1 entnommen werden, auf deren Inhalt hier explizit Bezug genommen wird.

Der Verkleidungsteil-Grundkörper kann insbesondere ein lackierter Verkleidungsteil-Grundkörper sein und vor dem Heraustrennen des Segments mit wenigstens einer Lackschicht versehen werden, sodass der Deckel eine der Lackierung des Verkleidungsteil-Grundkörpers identische oder entsprechende Lackierung aufweist.

Das Verbindungselement kann insbesondere ein Klappenmodul mit wenigstens einem Befestigungsabschnitt zum Verbinden mit dem Verkleidungsteil-Grundkörper mit einer gegen über dem Befestigungsabschnitt verschwenkbaren Deckeltragstruktur sein. Der Deckel ist entsprechend mit der Deckeltragstruktur verbunden, sodass der Deckel über das Verbindungselement bzw. das Klappenmodul mit dem Verkleidungsteil-Grundkörper verbunden ist.

Das Bereitstellen des Verkleidungsteil-Grundkörpers kann insbesondere einen Herstellungsschritt des Kunststoff-Spritzgießen umfassen.

Das Verkleidungsteil oder der Verkleidungsteil-Grundkörper kann eine Stoßfängerverkleidung, eine Türverkleidung, eine Klappenverkleidung, eine Heckklappenverkleidung, eine Schwellerverkleidung, ein Fahrzeugdach, ein Kotflügel, eine Radlaufblende oder eine Unterbodenverkleidung sein.

Die Öffnung und der Deckel können Bestandteil einer Abdeckung zu einer Betankungsvorrichtung, einer Batterie-Ladebuchse, eines Batterie-Ladesteckers, eines Abschlepphakens, einer Abschleppöse, einer Kameraeinheit, einer Sensoreinheit oder einer Scheinwerferreinigungsanlage eines Kraftfahrzeugs sein.

Teil der Erfindung ist ferner ein Verkleidungsteil eines Kraftfahrzeuges hergestellt mit einem Verfahren nach einem der Ansprüche 1-14 oder wie vorstehend beschrieben.

Im Folgenden wird die Erfindung anhand lediglich Ausführungsbeispiele darstellender Figuren näher erläutert.

Es zeigen:
- Fig. 1:: Heraustrennen des Segments aus einem Verkleidungsteil-Grundkörper;
- Fig. 2:: Verbinden des Deckels mit einem Verbindungselement;
- Fig. 3:: Darstellung des Verkleidungsteil-Grundkörpers in Hinteransicht;
- Fig. 4:: Darstellung des Verkleidungsteil-Grundkörpers in Vorderansicht;
- Fig. 5: Querschnittsdarstellung des Verkleidungsteil-Grundkörpers gemäß Schnittlinie X-X aus Fig. 4.

Vorliegend beansprucht wird ein Verfahren zur Herstellung eines Verkleidungsteils eines Kraftfahrzeuges. Das Verkleidungsteil besteht hierbei aus einem polymeren Werkstoff und weist einen Verkleidungsteil-Grundkörper 1 mit einer Öffnung 2, sowie einen die Öffnung 2 verdeckenden Deckel 3 auf.

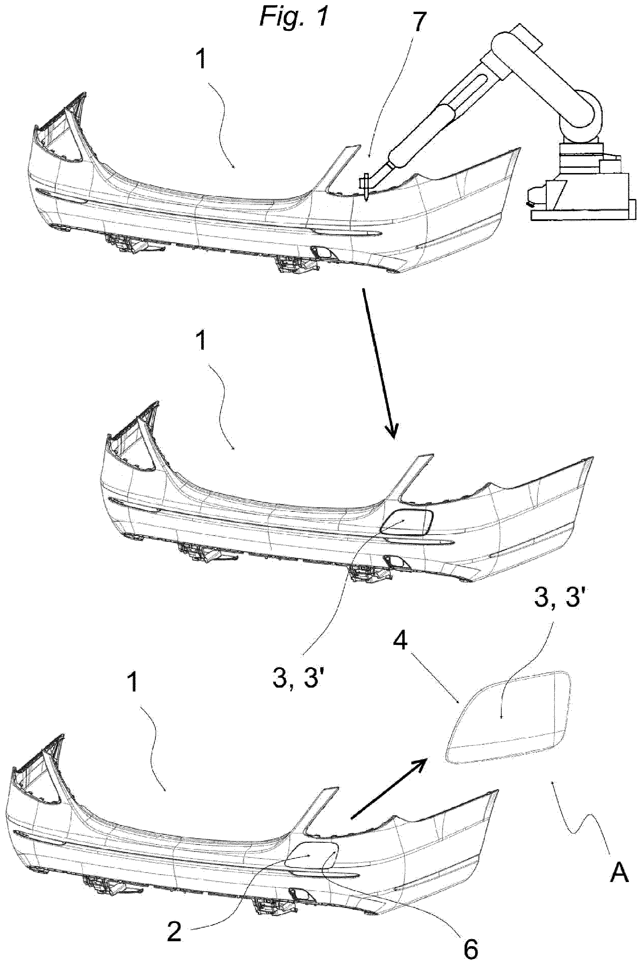

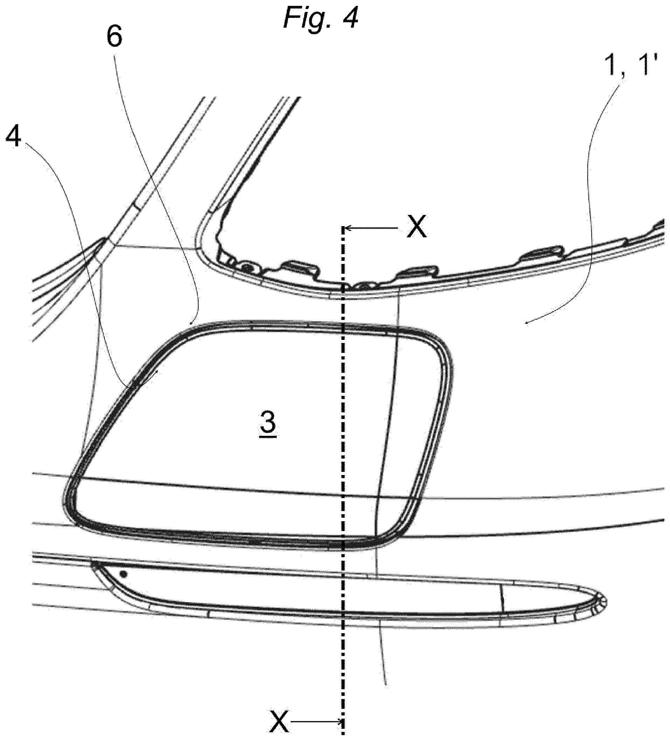

Das Verfahren umfasst die folgenden Schritte, die im Zusammenhang mit den folgenden Figuren 1-5 erläutert sind.

Ein Schritt umfasst das Bereitstellen eines Verkleidungsteil-Grundkörpers 1, sowie das herstellen der Öffnung 2 in dem Verkleidungsteil-Grundkörper 1 durch das Heraustrennen eines Segments 3' aus dem Verkleidungsteil-Grundkörper 1, wobei das Segment 3' einen geschlossenen Außenumfang A aufweist (vergleiche Fig. 1).

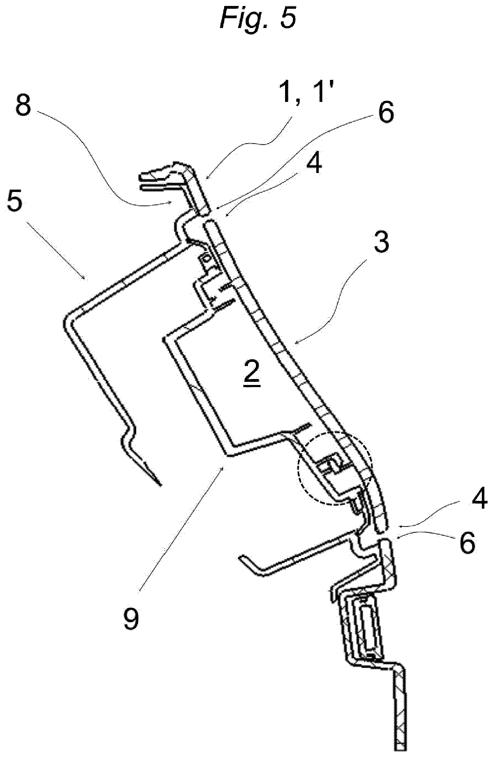

In einem weiteren oder zeitgleich zu dem vorgenannten durchgeführten Schritt wird das Segment 3' verwendet für die Herstellung des Deckels 3 durch ein Abrunden und/oder Umformen des Randbereichs 4 des Segments 3' (vgl. Fig. 5).

In einem weiteren Schritt erfolgt das Verbinden des Deckels 3 entweder mit dem ursprünglichen Verkleidungsteil-Grundkörper 1 oder mit einem entsprechenden Verkleidungsteil-Grundkörper 1' über wenigstens ein Verbindungselement 5.

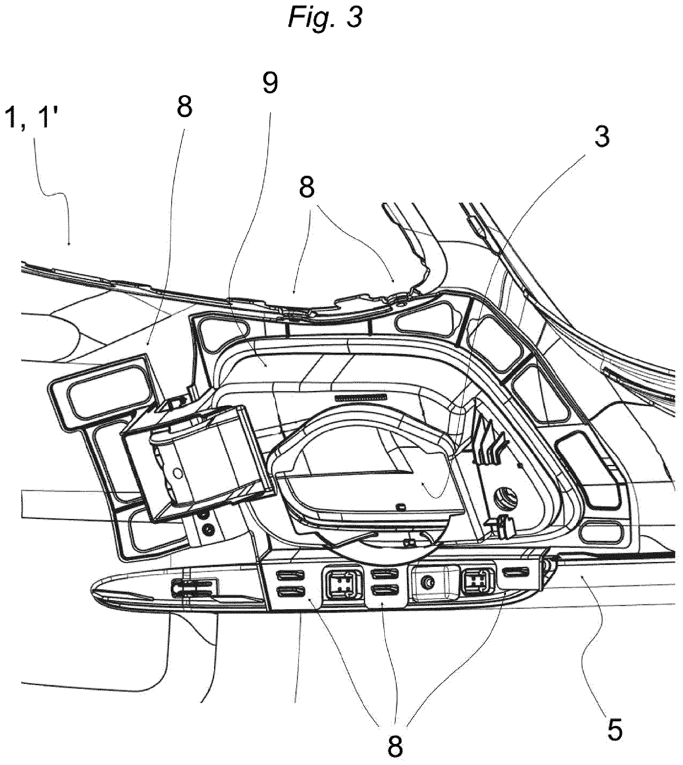

Bei dem in den Fig. 3, 4 und 5 im Detail gezeigten Verbindungselement 5 handelt es sich um ein Klappenmodul mit wenigstens einem Befestigungsabschnitt 8 zum Verbinden mit dem Verkleidungsteil-Grundkörper 1 und mit einer gegenüber dem Befestigungsabschnitt 8 verschwenkbaren Deckeltragstruktur 9.

Auch der Randbereich 6 der Öffnung 2 in dem Verkleidungsteil-Grundkörper 1 wird durch ein Abrunden und/oder Umformen bearbeitet (Ergebnis siehe Fig. 5). Bevorzugt umfasst das Abrunden und/oder Umformen des Randbereichs 4 des Segments 3' und/oder das Abrunden und/oder Umformen des Randbereichs 6 der Öffnung 2 wenigstens einen Prägevorgang und/oder wenigstens einen Fräsvorgang.

Besonders wirtschaftlich ist das Verfahren, wenn der Schritt des Abrundens und/oder Umformens des Randbereichs 4 des Segments 3' und/oder der Schritt des Abrundens und/oder Umformens des Randbereichs 6 der Öffnung 2 zusammen mit dem Schritt des Heraustrennens des Segments 3' durchgeführt wird.

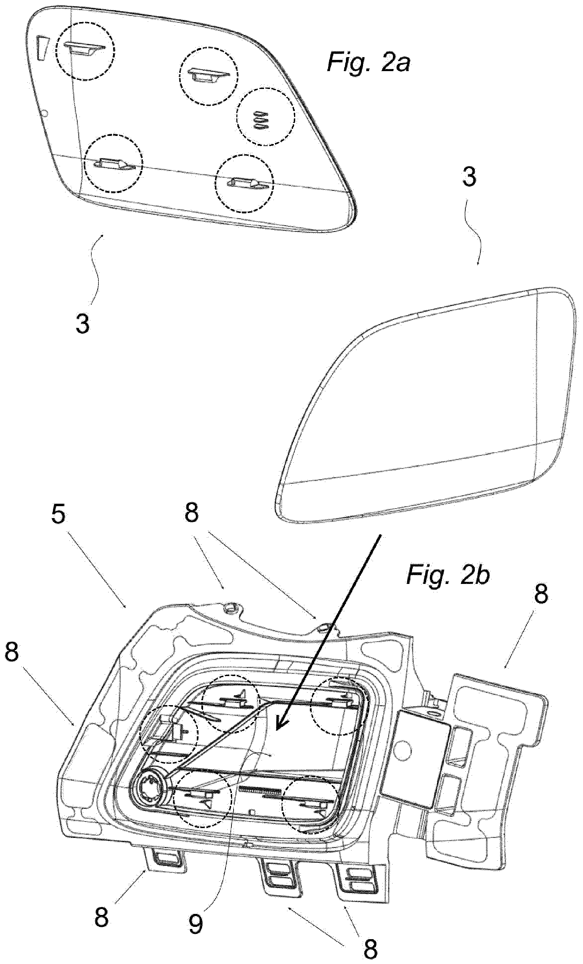

Das wenigstens eine Verbindungselement 5 kann stoffschlüssig und/oder formschlüssig mit dem Verkleidungsteil-Grundkörper 1, 1' verbunden sein oder verbunden werden. In Fig. 2a und in Fig. 2b sowie in Fig. 5 sind mit gestrichelten Kreisen Einschuhungselemente hervorgehobene, über die der Deckel 3 mit dem Verbindungselement 5 bzw. mit der Deckeltragstruktur 9 formschlüssig verbunden wird. In Figur 2b sind Befestigungsabschnitte 8 an dem Verbindungselement 5 erkennbar die zur Befestigung an dem Verkleidungsteil-Grundkörper 1 dienen. Dies sind zum einen Befestigungselementaufnahmen (Aufnahmelöcher im oberen Bereich), Schweißlaschen (auf der linken und rechten Seite), sowie Rastelementaufnahmen (vergleiche unteren Bereich). Der Deckel 3 ist formschlüssig mit dem Verbindungselement 5 verbunden, kann jedoch zusätzlich oder ergänzend auch stoffschlüssig (z.B. mittels einer Klebstoffschicht) mit dem Verbindungselement 5 verbunden sein oder werden. Für den Formschluss weist der Deckel 3 die bereits erwähnten und auf seiner der späteren Sichtseite gegenüberliegenden Rückseite (vergleiche Fig. 2a) vorgesehenen Einschuhungselemente auf die mit entsprechenden Einschuhungs-Gegenelementen an dem Verbindungselement 5 zusammenwirken (vergleiche mit gestrichenen Kreisen markierte Bereiche in Fig. 2a und Fig. 2b, sowie in Fig. 5).

Wenigstens ein Teil des wenigstens einen Verbindungselement 5 kann einstückig zusammen mit dem Verkleidungsteil-Grundkörper 1, insbesondere zusammen mit dem Bereich des späteren Segments, des Verkleidungsteil-Grundkörpers 1 ausgebildet sein.

Für den Fall, dass das herausgetrennte Segment 3' wieder mit dem ursprünglichen Verkleidungsteil-Grundkörper 1 verbunden werden soll, ist es von Vorteil, dass das Segment 3' und der Verkleidungsteil-Grundkörper 1 mit einer individuellen Codierung versehen wird oder bereits versehen sind, um eine exakte Zuordnung des Deckels 3 zu dem ursprünglichen Verkleidungsteil-Grundkörper 1 zu ermöglichen.

Im vorliegenden Fall erfolgt das Heraustrennen des Segments 3' mittels einer Fräsvorrichtung 7, welche sich an einem Roboter montiert befindet (vergleiche Fig. 1). Alternativ oder in Kombination kann das Heraustrennen mittels einer Stanzvorrichtung, einer Wasserstrahlschneidvorrichtung, einer Bohrvorrichtung, einer Laserstrahlschneidvorrichtung, einer Messerschneidvorrichtung oder einer Prägevorrichtung erfolgen. Insbesondere die Kombination einer Fräsvorrichtung 7 mit einer Prägevorrichtung hat sich für das beanspruchte Verfahren als besonders geeignet gezeigt. Die Prägevorrichtung kann hierbei in die Fräsvorrichtung 7 integriert sein und ebenfalls mit dem Roboter verfahren werden, oder als eigenständige Einheit über eine separate Handlingseinheit (z.B. Roboter) zur Bearbeitungsposition gefahren werden.

Bei dem in den Figuren gezeigten Verkleidungsteil-Grundkörper 1, 1' handelt es sich um eine Stoßfängerverkleidung. Der Verkleidungsteil-Grundkörper 1, 1' ist ein lackierter Verkleidungsteil-Grundkörper 1, 1' und wird vor dem Heraustrennen des Segments 3' mit wenigstens einer Lackschicht versehen, sodass der Deckel 3 eine der Lackierung des Verkleidungsteil-Grundkörpers identische (für den Fall, dass der Deckel 3 mit dem ursprünglichen Verkleidungsteil-Grundkörper 1 verbunden wird) oder eine entsprechende Lackierung (für den Fall, dass der Deckel 3 mit einem entsprechenden Verkleidungsteil-Grundkörper 1'verbunden wird) aufweist.

Das Bereitstellen des Verkleidungsteil-Grundkörpers 1, 1' umfasst einen Herstellungsschritt des Kunststoff-Spritzgießen.

Bei dem herzustellenden Verkleidungsteil bzw. Verkleidungsteil-Grundkörper 1, 1' kann es sich beispielsweise auch um eine Türverkleidung, eine Klappenverkleidung (insbesondere Heckklappenverkleidung), eine Schwellerverkleidung, ein Fahrzeugdach, ein Kotflügel, eine Radlaufblende oder eine Unterbodenverkleidung handeln.

Die Öffnung 2 und der Deckel 3 können Bestandteil einer Abdeckung zu einer Betankungsvorrichtung, einer Batterie-Ladebuchse, eines Batterie-Ladesteckers, eines Abschlepphakens, einer Abschleppöse, einer Kameraeinheit, einer Sensoreinheit oder einer Scheinwerferreinigungsanlage eines Kraftfahrzeugs sein.

## Patentansprüche

1. Verfahren zur Herstellung eines Verkleidungsteils eines Kraftfahrzeuges, wobei das Verkleidungsteil aus einem polymeren Werkstoff besteht und einen Verkleidungsteil-Grundkörper (1, 1') mit einer Öffnung (2), sowie einen die Öffnung (2) verdeckenden Deckel (3) aufweist,
umfassend die folgenden Schritte:
- Bereitstellen eines Verkleidungsteil-Grundkörpers (1),
- Herstellen der Öffnung (2) in dem Verkleidungsteil-Grundkörper (1) durch das Heraustrennen eines Segments (3') aus dem Verkleidungsteil-Grundkörper (1), wobei das Segment (3') einen geschlossenen Außenumfang (A) aufweist,
- Verwenden des Segments (3') für die Herstellung des Deckels (3) durch ein Abrunden und/oder Umformen des Randbereichs (4) des Segments (3'),
- Verbinden des Deckels (3) mit dem ursprünglichen Verkleidungsteil-Grundkörper (1) oder mit einem entsprechenden Verkleidungsteil-Grundkörper (1') über wenigstens ein Verbindungselement (5).

2. Verfahren nach Anspruch 1, **dadurch gekennzeichnet, dass** auch der Randbereich (6) der Öffnung (2) in dem Verkleidungsteil-Grundkörper (1) durch ein Abrunden und/oder Umformen bearbeitet wird.

3. Verfahren nach einem der vorstehenden Ansprüche 1 oder 2, **dadurch gekennzeichnet, dass** das Abrunden und/oder Umformen des Randbereichs (4) des Segmentes (3') und/oder das Abrunden und/oder Umformen des Randbereichs (6) der Öffnung (2) wenigstens einen Prägevorgang und/oder wenigstens einen Fräsvorgang umfasst.

4. Verfahren nach einem der vorstehenden Ansprüche, **dadurch gekennzeichnet, dass** der Schritt des Abrundens und/oder Umformens des Randbereichs (4) des Segments (3') und/oder der Schritt des Abrundens und/oder Umformens des Randbereichs (6) der Öffnung (2) zusammen mit dem Schritt des Heraustrennens des Segments (3') durchgeführt wird.

5. Verfahren nach einem der vorstehenden Ansprüche, **dadurch gekennzeichnet, dass** das wenigstens eine Verbindungselement (5) stoffschlüssig und/oder formschlüssig mit dem Verkleidungsteil-Grundkörper (1, 1') verbunden ist oder wird.

6. Verfahren nach einem der vorstehenden Ansprüche, **dadurch gekennzeichnet, dass** das wenigstens eine Verbindungselement (5) stoffschlüssig und/oder formschlüssig mit dem Deckel (3) oder dem Segment (3') verbunden ist oder wird.

7. Verfahren nach einem der vorstehenden Ansprüche, **dadurch gekennzeichnet, dass** wenigstens ein Teil des wenigstens eine Verbindungselements (5) einstückig zusammen mit dem Verkleidungsteil-Grundkörper (1), insbesondere zusammen mit dem Bereich des späteren Segments (3') des Verkleidungsteil-Grundkörpers (1) ausgebildet ist.

8. Verfahren nach einem der vorstehenden Ansprüche, **dadurch gekennzeichnet, dass** das wenigstens eine Verbindungselement (5) wenigstens einen Befestigungsabschnitt (8), insbesondere einen Teil eines Rastelements und/oder eine Schweißlasche und/oder eine Befestigungselementaufnahme, zur Befestigung an dem Deckel (3) und/oder zur Befestigung an dem Verkleidungsteil-Grundkörper (1) umfasst.

9. Verfahren nach einem der vorstehenden Ansprüche, **dadurch gekennzeichnet, dass** das Segment (3') und der Verkleidungsteil-Grundkörper (1) mit einer individuellen Codierung versehen werden oder versehen sind, um eine exakte Zuordnung des Deckels (3) zu dem ursprünglichen Verkleidungsteil-Grundkörper (1) zu ermöglichen.

10. Verfahren nach einem der vorstehenden Ansprüche, **dadurch gekennzeichnet, dass** das Heraustrennen mittels einer Stanzvorrichtung, einer Fräsvorrichtung (7), einer Wasserstrahlschneidvorrichtung, einer Bohrvorrichtung, einer Laserstrahlschneidvorrichtung, einer Messerschneidvorrichtung, einer Prägevorrichtung oder einer Kombination aus wenigstens zwei der vorgenannten Vorrichtungen erfolgt.

11. Verfahren nach einem der vorstehenden Ansprüche, **dadurch gekennzeichnet, dass** der Verkleidungsteil-Grundkörper (1, 1') ein lackierter Verkleidungsteil-Grundkörper (1, 1') ist und vor dem Heraustrennen des Segments (3') mit wenigstens einer Lackschicht versehen wird, sodass der Deckel (3) eine der Lackierung des Verkleidungsteil-Grundkörpers (1, 1') identische oder entsprechende Lackierung aufweist.

12. Verfahren nach einem der vorstehenden Ansprüche **dadurch gekennzeichnet, dass** das Verbindungselement (5) ein Klappenmodul ist mit wenigstens einem Befestigungsabschnitt (8) zum Verbinden mit dem Verkleidungsteil-Grundkörper (1) und mit einer gegenüber dem Befestigungsabschnitt (8) verschwenkbaren Deckeltragstruktur (9).

13. Verfahren nach einem der vorstehenden Ansprüche, **dadurch gekennzeichnet, dass** das Bereitstellen des Verkleidungsteil-Grundkörpers (1, 1') einen Herstellungsschritt des Kunststoff-Spritzgießens umfasst.

14. Verfahren nach einem der vorstehenden Ansprüche, **dadurch gekennzeichnet, dass** das Verkleidungsteil oder der Verkleidungsteil-Grundkörper (1, 1') eine Stoßfängerverkleidung, eine Türverkleidung, eine Klappenverkleidung, eine Heckklappenverkleidung, eine Schwellerverkleidung, ein Fahrzeugdach, ein Kotflügel, eine Radlaufblende oder eine Unterbodenverkleidung ist.

15. Verkleidungsteil eines Kraftfahrzeuges, hergestellt mit einem Verfahren nach einem der vorstehenden Ansprüche.
